# EUROPÄISCHE PATENTSCHRIFT

(11) **EP 1 369 616 B1**
(45) Veröffentlichungstag und Bekanntmachung des Hinweises auf die Patenterteilung: **25.10.2006**
(21) Anmeldenummer: 02012174.5
(22) Anmeldetag: 03.06.2002
(51) Int. Cl.: F16F 13/20

(54) **Hydrofeder als Primärfeder in Schienenfahrzeugen**
Hydraulic spring used as principal spring in rail vehicles
Ressort hydraulique utilisé comme ressort principal dans des véhicules ferroviaires

(43) Veröffentlichungstag der Anmeldung: 10.12.2003
(73) Patentinhaber: ContiTech Luftfedersysteme GmbH, 30165 Hannover (DE)
(72) Erfinder: Gedenk, Volker, 30966 Hemmingen (DE)
(74) Vertreter: Finger, Karsten

(56) Entgegenhaltungen:
- EP-A- 0 075 969
- EP-A- 0 240 028
- DE-A- 2 712 641
- GB-A- 872 230
- US-A- 5 464 196
- PATENT ABSTRACTS OF JAPAN vol. 1997, no. 11, 28. November 1997 (1997-11-28) & JP 09 177869 A (KURASHIKI KAKO CO LTD), 11. Juli 1997 (1997-07-11)

## Beschreibung

### Stand der Technik

Die gemäß dem Oberbegriff des Anspruchs 1 vorbekannte Hydrofeder besteht im wesentlichen aus einem als Federelement dienenden Gummiteil (bzw. einem Teil aus elastomerem Material), das umfangsseitig an ein topfförmiges Gebilde (- zur achsseitigen Befestigung -) und das axial an einem Bolzen (- zur aufbauseitigen Befestigung -) angebracht ist.
Zur Realisierung der Dämpfungsfunktion ist das topfförmige Gebilde teilweise mit einer viskosen Flüssigkeit gefüllt, in der eine an einer unteren Verlängerung des Befestigungsbolzens quer angebrachte Dämpfungsplatte bewegbar ist.
Zwischen viskoser Flüssigkeit und Gummiteil befindet sich ein mit Gas gefüllter Hohlraum.

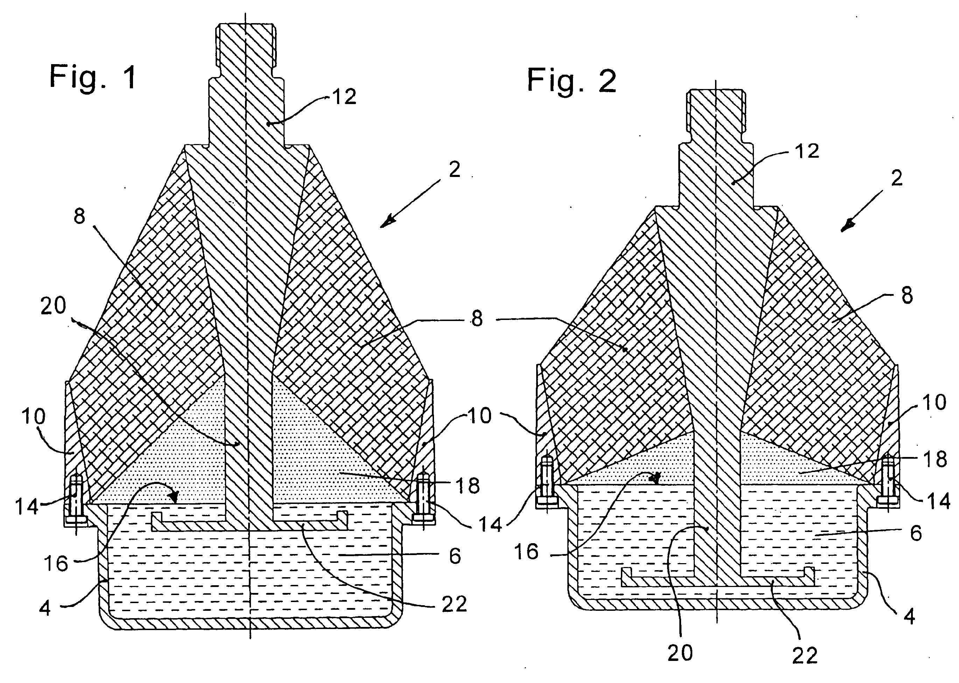

Ein derartiges Lager ist aus der EP 0 669 484 A1 vorbekannt (siehe z. B. Fig. 1, 7, 11, 15 und 16). Dort soll das Lager die Kabine eines Industriefahrzeugs (Fig. 18) abstützen.
Der zwischen Elastikteil und viskoser Flüssigkeit befindliche Hohlraum 17A dient dort dazu, die Strömung der viskosen Flüssigkeit zu erschweren (Sp. 5/11-13). Ansonsten wird der Hohlraum 17A nicht näher abgehandelt, da er für die EP 0 669 484 A1 nicht erfindungswesentlich ist sondern bereits damals (1995) zum Stand der Technik gehörte (siehe Fig. 17), wo ebenfalls ein solcher Hohlraum (Luftraum) zu sehen ist.
Der Rand des in Fig. 1, 7, 11, 15 und 16 gezeigten Gummiteils dient als Anschlag für die Dämpferplatte - ähnlich wie die auf die in Fig. 17 auf die Dämpferplatte aufgesetzten elastischen Stopper 108A als Anschlag dienen.

Dokument DE 2712641 offenbart eine Hydrofeder für einen Pkw.

Die Strömungsverhältnisse der bekannten Konstruktionen lassen vermuten, dass für ein optimales Funktionieren ein Pendeln um eine gedachte Null-Linie erforderlich ist.

Ein Pendeln um eine vorgegebene Null-Lage ist aber im Fall einer Primärfeder, wo Aufbauten mit stark unterschiedlichen Beladungszuständen abzustützen und Schwingungsanregungen abzufedern und abzudämpfen sind, nicht gegeben. Somit scheinen die bekannten Konstruktionen für den Einsatz als Primärfedern nicht geeignet.

Um eine Primärfeder mit hydraulischer Dämpfung realisieren zu können, muss Rücksicht genommen werden auf die bei Primärfedern auftretenden großen Lastunterschiede. Bei den bisher bekannten Lagern, die mit hochviskosen Flüssigkeiten arbeiten, ist das nicht der Fall, da die Unterschiede zwischen Leerlast und Volllast gering sind. Wenn ein solches Lager sich verkleinert, reicht die Weichheit des Gummikörpers aus, den bei ungefülltem Lager sich verkleinernden Raum im Topf auszugleichen. Der Gummikörper beult sich aus und stellt dadurch der inkompressiblen Flüssigkeit den benötigten Raum zur Verfügung.

Bei der Feder gemäß dieser Erfindung ist das nicht möglich. Da sich der Raum unterhalb des Federelements stark verändert, reicht das Ausbeulen des Gummikörpers nicht aus. Es muss deshalb ein zusätzlicher Raum zur Verfügung gestellt werden.

### Aufgabe, Lösung und Vorteile der Erfindung

Die Aufgabe der vorliegenden Erfindung besteht darin, eine preiswert herzustellende und zuverlässig funktionierende _{"}Hydrofeder" zur Abstützung und elastischen Entkopplung der Aufbauten von Schienenfahrzeugen zu schaffen, die den unterschiedlichsten Beladungszuständen "gewachsen" ist.

Dies wird bei der erfindungsgemäßen Hydrofeder mit den Merkmalen des Hauptanspruchs dadurch erreicht, dass sich zwischen Gummiteil und viskoser Flüssigkeit ein gasgefüllter Hohlraum befindet, der kegelförmig ausgebildet ist und dessen Volumen über die Kompression des Gases veränderbar ist (Bild 1 und 2).

Um den bei der Komprimierung des Gases entstehenden Überdruck nicht zu groß werden zu lassen, muss der mit Gas gefüllte Hohlraum eine bestimmte Größe haben. Damit sich die Flüssigkeit nicht mit dem Gas vermischt und dadurch seine Viskosität undefiniert ändert, wodurch die Dämpfungseigenschaften aufgehoben werden, ist der Hohlraum nach oben kegelförmig ausgebildet. Dadurch ist gewährleistet, dass sich das Gas immer an der höchsten Stelle befindet.

Über die Größe des Gasvolumens ist ebenfalls die Charakteristik der Feder beeinflussbar. Durch die Komprimierung des Gases entsteht eine Kraft, die der Traglast entgegengerichtet ist. Je kleiner der Hohlraum ist, um so größer wird die Gegenkraft. Die Federkennlinie, die bei großem Gasvolumen fast linear ist (Bild 3), wird bei kleinem Gasvolumen sehr progressiv (Bild 4).

Vorzugsweise ist die Größe des Hohlraumes so dimensioniert, dass er dem 1½-fachen des Rauminhaltes entspricht, den das Gummiteil bei der Einfederung zusätzlich einnimmt. Auf diese Weise ist das Lager imstande, Schwankungen in der Grundlast im Verhältnis 1 zu 4 auszugleichen, die sich durch die Änderung des Beladungszustandes zwischen Leer- und Volllast ergibt, ohne dass eine Beeinträchtigung der Federwirkung eintritt.

Durch die in den weiteren Unteransprüchen aufgeführten Maßnahmen sind vorteilhafte Weiterbildungen und Verbesserungen der im Hauptanspruch angegebenen Grundidee möglich.

Besonders vorteilhaft ist es, über die Höhe des Gasdruckes die Tragfähigkeit der Feder zu verändern. Das Gaspolster übernimmt dabei einen Teil der Federungsaufgaben, ähnlich wie bei einem Luftfederbalg. Dies kann durch Voreinstellung des Druckes während der Herstellung geschehen. Eleganter ist es, dies während des Betriebes durchzuführen, indem je nach Beladungszustand der Gasdruck geregelt wird.

### Zeichnungen

Im folgenden wird die erfindungsgemäße Hydrofeder anhand eines Ausführungsbeispiels näher beschrieben. Es zeigt:
Fig. 1 den Längsschnitt durch eine Hydrofeder im unbelasteten Zustand;
Fig. 2 den Längsschnitt durch dieselbe Hydrofeder im belasteten Zustand;

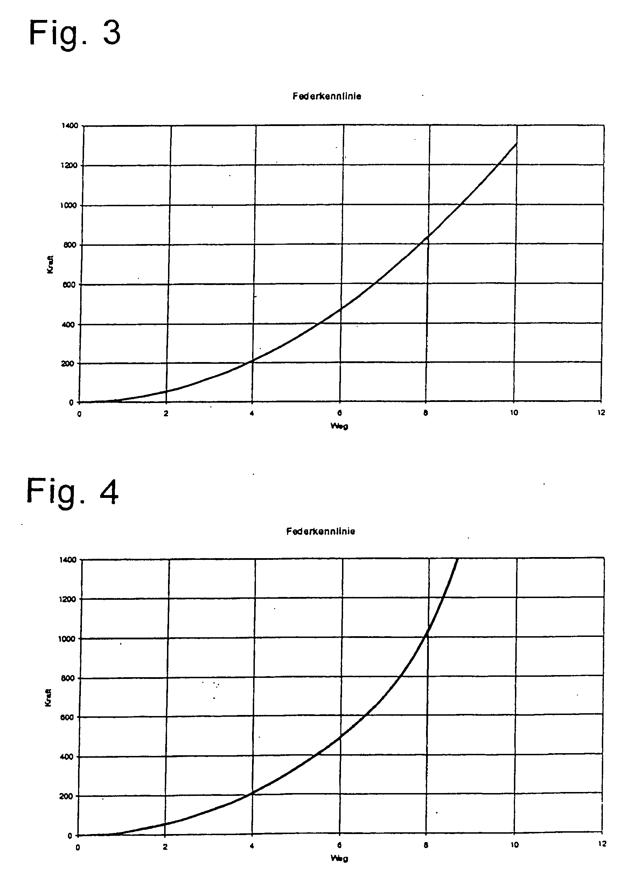

Fig. 3 eine Weg/Kraft-Federkennlinie bei großem Gasvolumen; und
Fig. 4 eine Weg/Kraft-Federkennlinie bei kleinem Gasvolumen.

### Beschreibung

Das in den Figuren 1 und 2 im Längsschnitt dargestellte Ausführungsbeispiel des erfindungsgemäßen Hydrolagers 2 weist ein topfförmiges Gehäuse 4 auf, das mit einer viskosen Hydraulikflüssigkeit 6 gefüllt ist. Den oberen Abschluss des topfförmigen Gehäuses 6 bildet ein Federelement 8 aus gummielastischem Material. An seinem Außenumfang ist dieses Federelement 8 in einen Außenring 10 einvulkanisiert. Axial ist das Federelement 8 mit einem stabförmigen Anschlussteil (Befestigungsbolzen) 12 verbunden.

Der Außenring 10 ist mittels Schrauben 14 druckdicht an dem oberen Rand des topfförmigen Gehäuses 4 befestigt. Zwischen der Oberfläche 16 der Hydraulikflüssigkeit 6 und dem Federelement 8 besteht ein mit einem Gas gefüllter Hohlraum 18. Der Befestigungsbolzen 12 weist an seinem unteren Ende eine mit Querplatte (Dämpfungsplatte) 22 versehene Verlängerung 20 (Stempel 20, 22) auf. Die Dämpfungsplatte 22 taucht in die hochviskose Flüssigkeit 6 ein. Bei Auslenkungsbewegungen des Federelements 8 wird durch Verdrängung von Flüssigkeit 6 eine Dämpfung bewirkt.

### Bezugszeichenliste

- 2: Hydrolager, Feder
- 4: topfförmiges Gehäuse
- 6: (Hydraulik-)Flüssigkeit
- 8: Federelement, Gummiteil
- 10: Außenring
- 12: stabförmiges Anschlussteil, (Befestigungs-)Bolzen
- 14: Schraube(n)
- 16: Oberfläche der Hydraulikflüssigkeit
- 18: Gas, Hohlraum
- 20: (untere) Verlängerung des stabförmigen Anschlussteils
- 22: Querplatte, Dämpfungsplatte

## Patentansprüche

1. Hydrofeder (2) als Primärfeder in einem Schienenfahrzeug
mit einem topfförmigen Gehäuse (4),
das oben mit einem Federelement (8) aus gummi-elastischem Material druckdicht abgeschlossen ist, und
das teilweise mit einem Gas (18) und ansonsten mit einer Hydraulikflüssigkeit (6) gefüllt ist,
wobei das Federelement (8) ein axial angeordnetes, bolzenförmiges Anschlussteil (12) mit einer an seiner unteren Verlängerung (20) befindlichen Querplatte (Dämpfungsplatte, 22) aufweist, und
wobei die Dämpfungsplatte (22) in die viskose Flüssigkeit (6) eintaucht,
**dadurch gekennzeichnet,**
**dass** der mit Gas gefüllte Hohlraum (18), dessen Volumen über die Kompression veränderbar ist, eine kegelförmige Gestalt aufweist, wobei die Größe des Hohlraums (18) im ungefederten Zustand dem 1½-fachen des Rauminhalt entspricht, den das Federelement (8) bei der Einfederung zusätzlich einnimmt

2. Hydrofeder nach Anspruch 1,
**gekennzeichnet durch**
eine Voreinstellung des Gasdrucks in dem Hohlraum (18).

3. Hydrofeder nach einem der Ansprüche 1 oder 2,
**dadurch gekennzeichnet,**
**dass** der in dem Hohlraum (18) herrschende Gasdruck während des Betriebes einstellbar ist.

4. Hydrofeder nach Anspruch 3,
**dadurch gekennzeichnet,**
**dass** die Einstellung des Gasdrucks je nach Beladungszustand der unter Last stehenden Feder (2) durchführbar ist.

## Claims

1. Hydraulic spring (2) for use as the primary spring in a rail vehicle,
comprising a cup-shaped housing (4).
which is closed off at the top in a pressure-tight manner with a spring element (8) made of elastomeric material, and
which is filled partially with a gas (18) and otherwise with a hydraulic fluid (6),
wherein the spring element (8) has an axially disposed, bolt-shaped connector part (12) having a transverse plate (damping plate, 22) located on its lower extension (20), and
wherein the damping plate (22) is immersed in the viscous fluid (6),
**characterized in that**
the gas-filled cavity (18), the volume of which can be altered by means of compression, has a conical shape, the size of the cavity (18) in the unsprung state corresponding to 1½ times the volume which the spring element (8) additionally occupies when it is compressed.

2. Hydraulic spring according to Claim 1, **characterized by** a presetting of the gas pressure in the cavity (18).

3. Hydraulic spring according to one of Claims 1 or 2, **characterized in that** the gas pressure prevailing in the cavity (18) can be adjusted during operation.

4. Hydraulic spring according to Claim 3, **characterized in that** the adjustment of the gas pressure can be carried out according to the load state of the loaded spring (2).

## Revendications

1. Ressort hydraulique (2) utilisé comme ressort principal dans des véhicules ferroviaires,
comprenant un boîtier en forme de pot (4)
qui est fermé de manière étanche à la pression en haut par un élément de ressort (8) en matériau élastomère, et
qui est rempli en partie de gaz (18) et aussi de liquide hydraulique (6),
l'élément de ressort (8) présentant une partie de raccordement (12) disposée axialement, en forme de goujon, avec une plaque transversale (plaque d'amortissement, 22) située au niveau de son prolongement inférieur (20), et
la plaque d'amortissement (22) plongeant dans le liquide visqueux (6),
**caractérisé en ce que**
l'espace creux (18) rempli de gaz, dont le volume peut être modifié par compression, présente une forme conique, la taille de l'espace creux (18) dans l'état non supporté par ressort correspondant à 1 fois et demie le volume de l'espace que l'élément de ressort (8) adopte en plus lors de la suspension à ressort.

2. Ressort hydraulique selon la revendication 1,
**caractérisé par**
un préajustement de la pression de gaz dans l'espace creux (18).

3. Ressort hydraulique selon l'une quelconque des revendications 1 ou 2,
**caractérisé en ce que**
la pression de gaz régnant dans l'espace creux (18) peut être ajustée pendant le fonctionnement.

4. Ressort hydraulique selon la revendication 3,
**caractérisé en ce que**
l'ajustement de la pression de gaz peut être effectué en fonction de l'état de charge du ressort (2) sous charge.
